# EUROPEAN PATENT APPLICATION

(11) **EP 0 964 342 A2**
(43) Date of publication of application: **15.12.1999**
(21) Application number: 99111335.8
(22) Date of filing: 10.06.1999
(51) Int. Cl.: G06F 17/30

(54) **Data transfer system and data transfer method and its data transfer terminal**

(30) Priority: 10.06.1998 JP 16190298
(71) Applicant: NEC CORPORATION, Tokyo (JP)
(72) Inventor: Sugiura, Atsushi, Minato-ku, Tokyo (JP)
(74) Representative: Betten & Resch

(57) **Abstract**

A data transfer system for obtaining transfer data between terminals, in which: the terminal comprises a fingerprint scanner for reading a fingerprint and outputting the fingerprint image, and a data registering/acquiring unit for converting the fingerprint image into a fingerprint pattern suitable for fingerprint identification, and making a registration request for storing the fingerprint pattern and the transfer data being bound with each other, into the data management server, or making an acquisition request for acquiring the transfer data corresponding to the fingerprint pattern to the data management server; while the data management server comprises a data storing unit for storing the fingerprint pattern and the transfer data corresponding to this fingerprint pattern, and a data management unit for, upon receipt of the registration request from the data registering/acquiring unit of the terminal, registering the fingerprint pattern and the transfer data into the data storing unit, and upon receipt of the acquisition request from the data registering/acquiring unit, retrieving the transfer data corresponding to the fingerprint pattern from the data storing unit by using the fingerprint pattern as a retrieval key, so to transfer the same transfer data to a terminal of a receiving party.

## Description

### BACKGROUNDS OF THE INVENTION

### FIELD OF THE INVENTION

The present invention relates to a data transfer system and a data transfer method for transferring data between terminals of a computer system, industrial control machine, household electrical equipment, or the like, and its data transfer terminal.

### DESCRIPTION OF THE RELATED ART

File Transfer Protocol (FTP) is commonly used in transferring data between computers connected via a network. To transfer data by using the FTP command, it is required to specify a name of a file to be transferred and its directory path, and also required to specify a name of a transfer-target computer and directory path to which the data should be sent. A problem of this method using the FTP command is that users cannot transfer data if they do not know a computer name and a directory path and a file name.

Pick-and-Drop ("Pick and Drop: A Direct Manipulation Technique for Multiple Computer Environments" (refer to Proceedings of 10th annual symposium on User Interface Software and Technology, 1997)) is a method which allows the users to transfer data without specifying any symbolic computer name and directory path and file name.

The Pick-and-Drop system comprises a ID-recognizable pen 1201, a computer terminal 1202 with touch-sensitive screen that can recognize the ID assigned to the pen when the pen 1201 is coming into contact with the screen, a computer terminal 1203 having the same function, and a pen manager 1204 provided on a network.

In the Pick-and-Drop method, when the pen 1201 first touches the screen of the computer terminal 1202 or 1203, the data object pointed by the pen 1201 and the pen ID are bound and are registered into the pen manager 1204. When the pen 1201 next touches the screen of the other computer terminal 1203 or 1202, the pen ID is confirmed and the data object corresponding to the pen ID is obtained from the pen manager 1204 through a network. In these ways, a user can transfer data without specifying any symbolic computer name, path name, and the like. Multiple pens can be used on the same computers at the same time by giving different IDs to each pen.

The conventional Pick-and-Drop, however, has such a problem that a special ID-recognizable pen is necessary and a user must carry such a pen in order to transfer data.

Further, the Pick-and-Drop method has such another problem that, in order to make multiple pens available at the same time, unique IDs must be assigned to the respective pens. This ID management task becomes difficult when the number of pens is increased.

Further, the Pick-and-Drop method has such another problem that one pen deals with only one data object. To transfer n-pieces of data at the same time, in the Pick-and-Drop method, it is necessary to use n-pieces of pens or to repeat data transfer n times with one pen. Using many pens simultaneously is very troublesome for a user. When a transfer-target machine is at a long distance, it is actually impossible to repeat data transfer several times.

### SUMMARY OF THE INVENTION

An object of the present invention is to realize a data transfer system and a data transfer method with no need of recognizing a machine name of a data receiving party, and its data transfer terminal.

A second object of the present invention is to realize a data transfer system and a data transfer method with no need of any special tool such as a pen requiring recognition of ID, and its data transfer terminal.

According to the first aspect of the invention, a data transfer system for transferring data between multiple terminals, comprising:
storing means for storing a set of data to be transferred from a data sending terminal and a fingerprint pattern of an operator given in the same terminal being bound with each other; and
obtaining means for obtaining data corresponding to the fingerprint pattern, which is entered in a data receiving terminal, from said storing means by using the fingerprint pattern as a retrieval key.

According to the second aspect of the invention, a data transfer system, having multiple terminals and a server connected through a network, for transferring desired data between the terminals, the system comprising:
storing means, in a server, for storing a set of data to be transferred and a fingerprint pattern of an operator, which are sent from a data sending terminal through the network; and
obtaining means, in a data receiving terminal, for obtaining data corresponding to the fingerprint pattern, which is entered in a data receiving terminal, from said storing means by using the fingerprint pattern as a retrieval key.

According to the third aspect of the invention, a data transfer system, in which transfer data is sent from a data sending terminal to a data management server through a network and the transfer data is held in a data management server and the transfer data is obtained by a data receiving terminal from the data management server through the network,
said data sending terminal and said data receiving terminal comprising;
fingerprint reading means for reading a fingerprint and outputting the fingerprint image, and
data registering/acquiring means for converting the fingerprint image into a fingerprint pattern suitable for fingerprint identification, and making a registration request for storing a set of the fingerprint pattern and the transfer data being bound with each other into the data management server, or making an acquisition request for acquiring the transfer data corresponding to the fingerprint pattern to said data management server,
said data management server comprising;
data storing means for storing the fingerprint pattern and the transfer data corresponding to this fingerprint pattern, and
data management means for, upon receipt of the registration request from said data registering/acquiring means of said terminal, registering a set of the fingerprint pattern and the transfer data into said data storing means, and upon receipt of the acquisition request from said data registering/acquiring means, retrieving the transfer data corresponding to the fingerprint pattern from said data storing means by using the fingerprint pattern as a retrieval key, so to transfer the same transfer data to said data receiving terminal.

In the preferred construction, said terminal comprises input means for specifying data to be transferred or a position to which the data is transferred, and
said data registering/acquiring sends the transfer data specified by said input means correspondingly to the fingerprint pattern means and makes the data registration request to said data management server, and stores the transfer data sent from said data management server into the position specified by said input means.

In another preferred construction, said fingerprint reading means of said terminal is integrated with input means for doing specification of transfer data or specification of a position to which the data is transferred, and
said data registering/acquiring means makes a data registration request to said data management server by sending the transfer data specified by said input means correspondingly to the fingerprint pattern, and stores the transfer data sent from said data management server into the position specified by said input means. In another preferred construction, said data management means of said data management server,
upon receipt of a set of the transfer data and the fingerprint pattern from said data registering/acquiring means of said terminal, overwrites the transfer data corresponding to the received fingerprint pattern, on the stored transfer data of said data storing means, when there is a match for the same fingerprint pattern in said data storing means, and additionally stores a set of the received fingerprint pattern and the received transfer data being bound with each other into said data storing means when there is no match.
In another preferred construction, said data registering/acquiring means of said terminal
makes a data registration request for storing the transfer data into said data management server when the transfer data is not null, and makes a data acquisition request for acquiring the transfer data to said data management server when the transfer data is null, while
said data management means of said data management server,
upon receipt of a set of the transfer data and the fingerprint pattern from said data registering/acquiring means of said terminal, overwrites the transfer data corresponding to the received fingerprint pattern, on the stored transfer data of said data storing means, when there is a match for the same fingerprint pattern in said data storing means, and additionally stores a set of the received fingerprint pattern and the received transfer data being bound with each other into said data storing means when there is no match.
According to the fourth aspect of the invention, A data transfer system, in which transfer data sent from a data sending terminal through a network is held in a data management server and the transfer data is obtained by a data receiving terminal from the data management server through the network,
said terminal comprising;
fingerprint reading means for reading a fingerprint and outputting the fingerprint image, and
data registering/acquiring means for converting the fingerprint image into a fingerprint pattern suitable for fingerprint identification and outputting a set of the fingerprint pattern and the transfer data being bound with each other to said data management server, while,
said data management server comprising
data storing means for storing the fingerprint pattern and the transfer data corresponding to this fingerprint pattern, and
data management means for examining whether there is a match for the received fingerprint pattern in said data storing means, upon receipt of the transfer data and the fingerprint pattern from said data registering/acquiring means of said terminal, outputting the transfer data corresponding to the received fingerprint pattern when there is a match, and storing a set of the received fingerprint pattern and the transfer data being bound with each other into said data storing means.

In the preferred construction, said terminal comprises input means for specifying data to be transferred or a position to which the data is transferred, and said data registering/acquiring means outputs the transfer data specified by said input means to said data management server correspondingly to the fingerprint pattern and stores the transfer data sent from said data management server into the position specified by said input means. According to the fifth aspect of the invention, A data transfer system connecting multiple terminals and a data management server through a network, for transferring data between the terminals, wherein
said terminal comprising;
fingerprint reading means for reading a fingerprint and outputting the fingerprint image, and
data registering/acquiring means for converting the fingerprint image into a fingerprint pattern suitable for fingerprint identification, and making a registration request for storing the fingerprint pattern and an identifier capable of uniquely identifying the transfer data being bound with each other, into said data management server, or making an acquisition request for acquiring the identifier of the transfer data corresponding to the fingerprint pattern to said data management server,
said data management server comprising;
data storing means for storing the fingerprint pattern and the identifier of the transfer data corresponding to this fingerprint pattern, and
data management means for, upon receipt of the registration request from said data registering/acquiring means of said terminal, registering the fingerprint pattern and the identifier of the transfer data into said data storing means, and upon receipt of the acquisition request from said data registering/acquiring means, retrieving the identifier of the transfer data corresponding to the fingerprint pattern, which is entered in a data receiving terminal, from said data storing means by using the fingerprint pattern as a retrieval key, so to transfer the same transfer data to a data receiving terminal.

In the preferred construction, said terminal comprises input means for position, and specifying data to be transferred or a position to which the data is transferred, and
said data registering/acquiring means sends the identifier of the transfer data specified by said input means correspondingly to the fingerprint pattern and makes a registration request to said data management server, and stores the transfer data sent from said terminal of the data sending party into the position specified by said input means.
According to the sixth aspect of the invention, A data transfer system connecting multiple terminals through a network, for transferring data between the terminals, wherein
said terminals comprising;
fingerprint reading means for reading a fingerprint and outputting the fingerprint image,
data storing means for storing a set of a fingerprint pattern and the transfer data being bound with each other,
data registering/acquiring means for converting the fingerprint image from said fingerprint reading means into the fingerprint pattern suitable for fingerprint identification, and storing a set of the fingerprint pattern and the transfer data being bound with each other into said data storing means, or making an acquisition request for acquiring the transfer data corresponding to the fingerprint pattern, which is entered in a data receiving terminal, by using the fingerprint pattern as a retrieval key, to the other terminal, and
data management means for, upon receipt of the acquiring request, performing pattern matching between the fingerprint pattern in the data acquisition request and a fingerprint pattern stored in said data storing means, and if there is a match, outputting the transfer data corresponding to the matched fingerprint pattern to the other terminal which sent the data acquisition request.

In the preferred construction, said terminal comprises input means for specifying data to be transferred or a position to which the data is transferred, and
said data registering/acquiring means stores the transfer data specified by said input means into said data storing means correspondingly to the fingerprint pattern and stores the transfer data into the position specified by said input means.

According to a further aspect of the invention, a data transfer terminal for transferring data through a network, comprising:
fingerprint reading means for reading a fingerprint and outputting the fingerprint image; and data registering/acquiring means for converting the fingerprint image into a fingerprint pattern suitable for fingerprint identification, and making a registration request for storing a set of the fingerprint pattern and the transfer data being bound with each other, into said data management server connected with the network, or making an acquisition request for acquiring the transfer data corresponding to the fingerprint pattern to said data management server.

In the preferred construction, the data transfer terminal further comprising input means for specifying data to be transferred or a position to which the data is transferred,
said data registering/acquiring means sending the transfer data specified by said input means correspondingly to the fingerprint pattern and making a data registration request to the data management server, and storing the transfer data sent from said data management server into the position specified by said input means.

In another preferred construction, said fingerprint reading means of said terminal is integrated with input means for specifying data to be transferred or a position to which the data is transferred, and
said data registering/acquiring means sends the transfer data specified by said input means correspondingly to the fingerprint pattern and makes a registration request to the data management server, and stores the transfer data sent from said data management server into the position specified by said input means.

In another preferred construction, said data registering/acquiring means of the terminal
makes a registration request for storing the transfer data into the data management server when the transfer data is not null and makes a data acquisition request for acquiring the transfer data to said data management server when the transfer data is null.

According to a further aspect of the invention, a data transfer method for holding transfer data sent from a data sending terminal in a data management server connected through a network and obtaining the transfer data, by a data receiving terminal, from the data management server through the network, the method comprising the following steps of:
in said terminal,
converting the fingerprint image obtained by reading a fingerprint into a fingerprint pattern suitable for fingerprint identification, and making a registration request for storing a set of the fingerprint pattern and the transfer data being bound with each other, into the data management server, or making an acquisition request for acquiring the transfer data corresponding to the fingerprint pattern to said data management server;
in said data management server, registering the fingerprint pattern and the transfer data corresponding to this fingerprint pattern into data storing means, upon receipt of the registration request from the terminal; and
retrieving the transfer data corresponding to the fingerprint pattern, which is sent from the terminal, from said data storing means by using the fingerprint pattern as a retrieval key, so to transfer the same transfer data to a data receiving terminal when receiving the acquisition request.

According to a further aspect of the invention, a data transfer method for holding transfer data sent from a data sending terminal in a data management server connected through a network and obtaining the transfer data, by a data receiving terminal, from the data management server through the network, the method comprising the following steps of:
in said terminal,
converting the fingerprint image obtained by reading a fingerprint into a fingerprint pattern suitable for fingerprint identification and outputting a set of the fingerprint pattern and the transfer data being bound with each other to said data management server;
in said data management server,
examining whether there is a match for the received fingerprint pattern in said data storing means when receiving the fingerprint pattern and the transfer data corresponding to this fingerprint pattern from said terminal, outputting the transfer data corresponding to the received fingerprint pattern to the terminal when there is a match, and storing the received fingerprint pattern and the transfer data being bound with each other into said data storing means when there is no match.

According to a further aspect of the invention, a data transfer method connecting multiple terminals with a data management server through a network, for transferring data between the terminals, comprising the following steps of:
in said terminal,
converting the fingerprint image obtained by reading a fingerprint into a fingerprint pattern suitable for fingerprint identification, and making a registration request for storing a set of the fingerprint pattern and an identifier capable of uniquely identifying the transfer data being bound with each other, into the data management server, or making an acquisition request for acquiring the identifier of the transfer data corresponding to the fingerprint pattern to the data management server;
in said data management server,
storing the fingerprint pattern and the identifier of the transfer data corresponding to this fingerprint pattern; and
registering the fingerprint pattern and the identifier of the transfer data into said data storing means, when receiving the registration request of the fingerprint pattern and the identifier of the transfer data corresponding to this fingerprint pattern from the terminal, and retrieving the identifier of the transfer data corresponding to the fingerprint pattern from said data storing means by using the fingerprint pattern as a retrieval key, so to transfer the same transfer data to a data receiving terminal when receiving the data acquiring request.

Other objects, features and advantages of the present invention will become clear from the detailed description given herebelow.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a view showing a constitutional example of a first embodiment of the present invention;
Fig. 2 is a view showing a constitutional example of a terminal in the first embodiment;
Fig. 3 is a view showing a constitutional example of a data control server in the first embodiment;
Fig. 4 is a view showing data to be stored in a data storage according to the embodiment;
Fig. 5 is a flow chart for use in describing the operation in the embodiment;
Fig. 6 is a flow chart for use in describing the operation of data registering processing in the embodiment;
Fig. 7 is a flow chart for use in describing the operation of data obtaining processing in the embodiment;
Fig. 8 is a flow chart for use in describing the operation according to a variation of the embodiment;
Fig. 9 is a view showing an example of data to be stored in a data storage according to the variation of the embodiment;
Fig. 10 is a view showing one constitutional example of a terminal according to the variation of the embodiment;
Fig. 11 shows an example of the transition of a screen and the transition of the data stored in the data storage according to the embodiment of the present invention;
Fig. 12 is a flow chart for use in describing the operation according to another variation of the embodiment;
Fig. 13 is a view showing an example of a screen displayed on a display 205 according to the variation of the embodiment;
Fig. 14 is a view showing a constitutional example of a second embodiment of the present invention;
Fig. 15 is a view showing a constitutional example of a terminal according to the second embodiment;

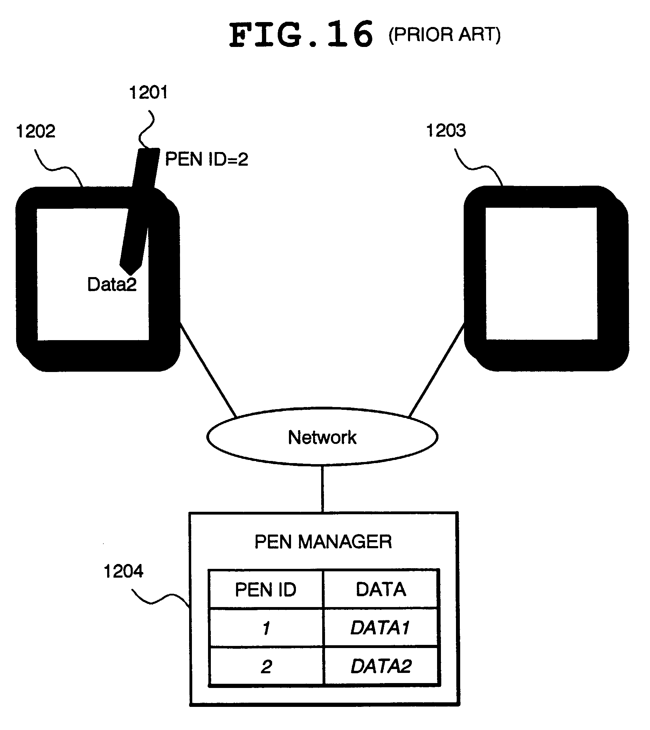

Fig. 16 is a view for use in describing the constitution of the conventional technique of the present invention.

### DESCRIPTION OF THE PREFERRED EMBODIMENT

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

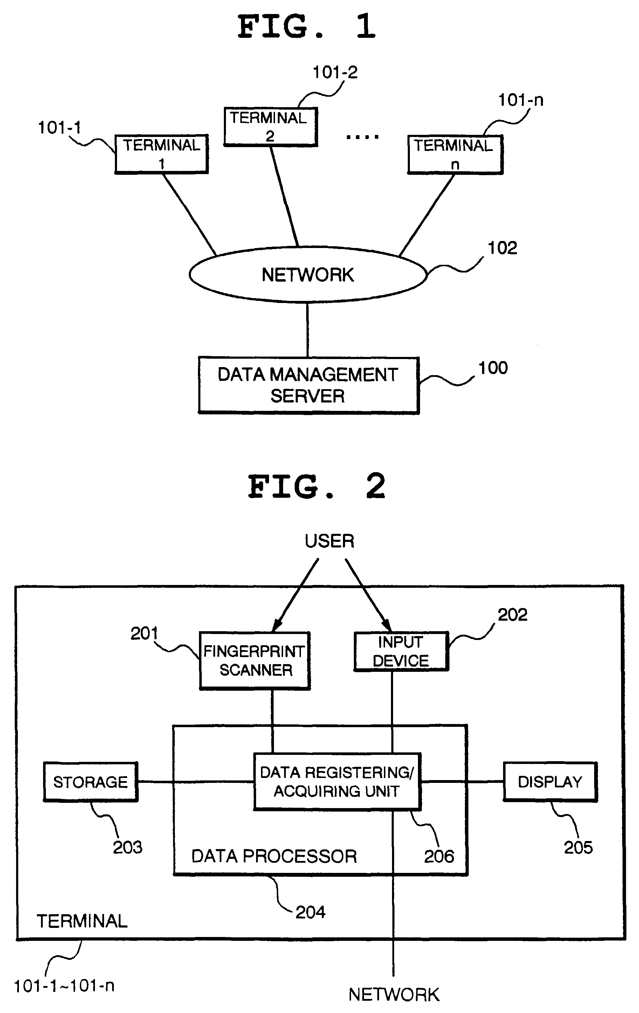

Fig. 1 is a block diagram showing the constitution of a system according to a first embodiment of the present invention. In Fig. 1, the first embodiment of the present invention comprises multiple terminals 101-1 to 101-n that may send data or receive data, and a data management server 100 accessible from these terminals 101-1 to 101-n via a network 102. The network 102 is available regardless of being wired, or wireless. It is not necessary to connect the terminals 101-1 to 101-n with each other through a network, if only they are connected to the data management server 100; alternatively, they may be connected to each other. Any electric or electronic equipment such as a household electrical appliance and an industrial machine, including electronic equipment having a communication function such as a telephone, a facsimile, a pager, a POS terminal as well as a computer can, be employed as the terminals 101-1 to 101-n.

Fig. 2 shows the constitutional example of the terminals 101-1 to 101-n that may send data or receive data. With reference to Fig. 2, the constitution of the terminals 101-1 to 101-n will be described.

Each terminal 101-1 to 101-n comprises at least a fingerprint scanner 201 for inputting fingerprints, an input device 202 such as a mouse or a key board for use in specifying data to be transferred, a storage 203 for storing data, a display 205 for displaying data, a data processor 204 operated by a program control.

The fingerprint scanner 201 reads the fingerprint image of the finger in contact with a user's finger, and sends the fingerprint image to the data processor 204. As the fingerprint scanner 201, any device capable of reading the fingerprint image in contact with a user's finger will be available, regardless of its method; for example, an optical scanner by prism such as described in "Automatic classification of fingerprint patterns (Information Processing Society of Japan, Workshop Papers, Vol. CV 18. No. 2, 1982, pp. 1-8)" and "Fingerprint information detecting method by prism - Comparison between total reflection method and optical path separation method (Institute of Electronics, Information and Communication Engineers, Transactions (D), Vol. J68-D, No. 3, 1985, pp. 414-415)", a scanner using hologram such as described in "Individual verification system using holographic fingerprint sensor (Institute of Electronics, Information and Communication Engineers, Technical Reports Vol. PRU 87, No. 31, 1987, pp. 27-33)", a scanner by use of ultrasound such as described in "Improved image quality of live scan fingerprint scanners using acoustic backscatter measurements (Proceedings of Biometric Consortium 8th Meeting, 1996)", a scanner of a semiconductor sensor by use of a thermal sensor such as described in "Thermal imaging fingerprint technology (Proceedings of Biometric Consortium 9th Meeting, 1997)", a scanner of a semiconductor sensor by use of capacitance such as described in "A direct fingerprint reader (Proceedings of CardTech/SecurTech, Vol. I:Technology, 1996, pp. 271-279)", or the like.

The data processor 204 of each terminal includes a data registering/acquiring unit 206. The data registering/acquiring unit 206 has the function of converting the fingerprint image read by the fingerprint scanner 201 into a fingerprint pattern Pj suitable for fingerprint identification, thereafter sending the fingerprint pattern Pj and data Dj specified by a user with the input device 202 to the data management server 100, and making a data registration request to the data management server 100 to store a set of the fingerprint pattern Pj and the data Dj.

The data registering/acquiring unit 206 also has the function of making a request of acquiring the data Dj stored in the data management server 100. At this time, the unit 206 sends the fingerprint pattern Pj to the data management server 100 and requests the data management server 100 to obtain the data Dj combined with the fingerprint pattern Pj.

The format of the fingerprint pattern Pj here depends on the method of matching fingerprint patterns in the data management server 100. For example, when the fingerprint matching method is the minutiae method, Pj is described by ridge ending patterns and ridge bifurcation patterns of minutia. In the case of the image matching method, Pj is described by the shading patterns of a fingerprint image.

The data processor 204, the display 205 and the input device provide the user with the user interface, which allows the user to specify data to be transferred. For example, this data specifying user interface may be the user interface where the user selects a data object, displayed on the display 205, by a click of mouse button. This data specification method, however, is only one example; it is not restricted to this example, but various modifications may be considered depending on the equipment adopting the present invention.

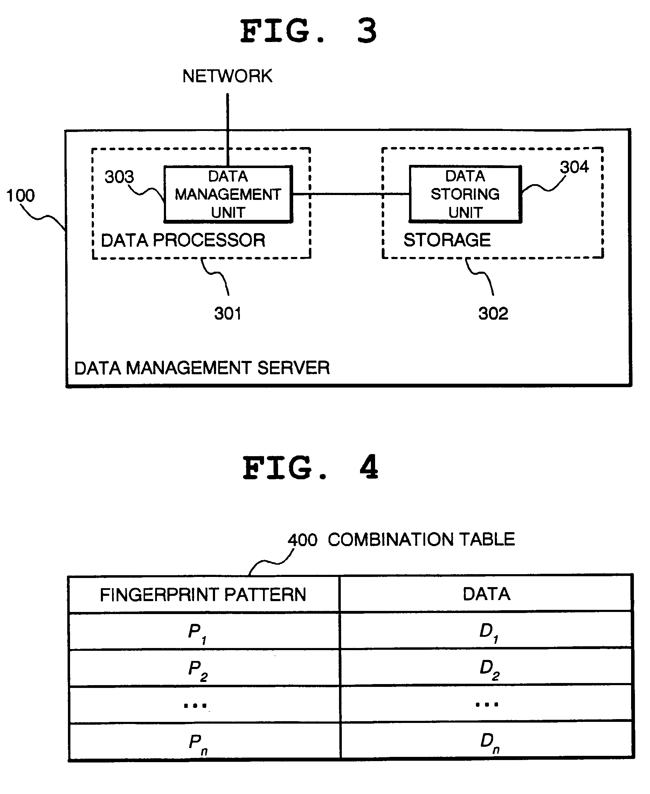

The data management server 100 will be described with reference to Fig. 3, The data management server 100 mediates data transfer from a data sending terminal to a data receiving terminal. The data management server 100 includes a data processor 301 and a storage 302 for storing information.

The storage 302 includes a data storing unit 304. The data storing unit 304 stores a sets of fingerprint pattern Pi (1<=i<=n) and data Di (1<=i<=n) bound to each pattern, as illustrated in Fig. 4.

The data processor 301 of the data management server 100 includes a data management unit 303. The data management unit 303 registers data into the data storing unit 304 and obtains data from the data storing unit 304.

The data registration process is performed when the data management unit 303 receives a fingerprint pattern Pj, data Dj and the data registration request from one of the terminals 101-1 to 101-n. Specifically, in the data registration process, the data management unit 303 first performs pattern matching between the fingerprint pattern Pj sent from the terminal and the fingerprint pattern Pi that have been already registered in the data storing unit 304. If no pattern in the data storing unit 304 is matched, the data management unit 303 adds Pj and Dj into the data storing unit 304. If there exists a matched pattern Pm, the data Dm assigned to Pm is replaced with the newly sent data Dj.

The data acquisition process is done when the data management unit 303 receives a fingerprint pattern Pj and the data acquisition request from one of the terminals 101-1 to 101-n. Specifically, in the data acquisition process, the data management unit 303 first performs pattern matching between the fingerprint pattern Pj sent from the terminal and the fingerprint pattern Pi (1<=i<=n) registered in the data storing unit 304. If there exists the matched pattern Pk, the data Dk corresponding to Pk is sent to the terminal making the data acquiring request. Depending on the necessity, Pk and Dk may be deleted from the data storing unit 304 after the data acquisition process, or may not be deleted.

Any matching method can be used in the data management unit 303, if only it can identify a fingerprint pattern, which mactch the given pattern, in previously-registered multiple template fingerprint patterns. For example, the minutiae method described in "Fingerprint verification system by valley shape (Institute of Electronics, Information and Communication Engineers Transactions (D), Vol. J71-D, No. 2, 1988, pp. 327-335)" or the image matching method described in "Fingerprint verification system by pattern matching (Institute of Electronics, Information and Communication Engineers Technical Reports, Vol. PRU 88, No. 83, 1988, pp. 65-72)" may be available.

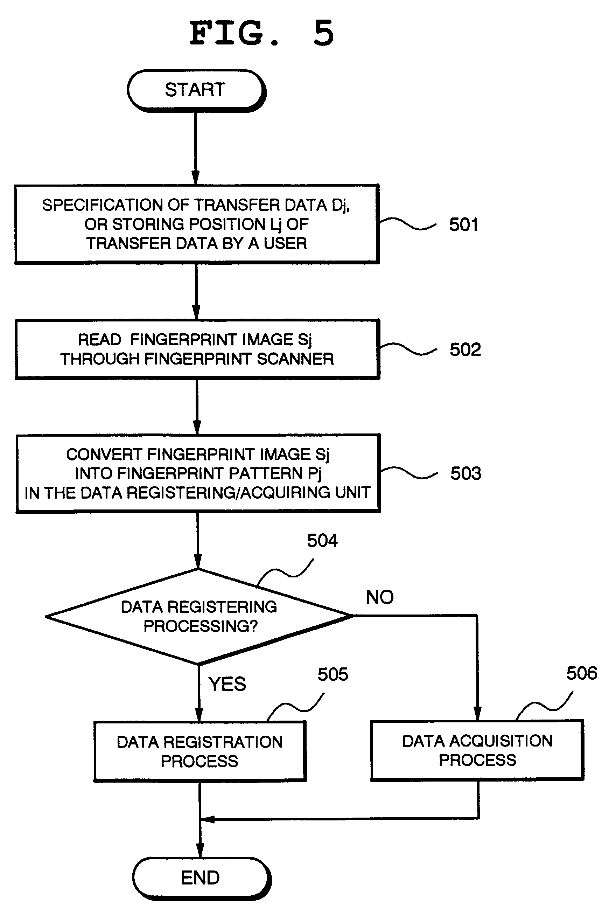

The operation of the first embodiment thus constituted will be described with reference to the flow charts of Figs. 5, 6, and 7.

In the embodiment, any terminal of the terminals 101-1 to 101-n may be a data sending party or a receiving party; there are some methods to determine which terminal should be a data sending terminal or a data receiving terminal. These methods will be described later. A data sending terminal performs the data registration though the data registering/acquiring unit 206, while a data receiving terminal performs the data acquisition through the data registering/acquiring unit 206.

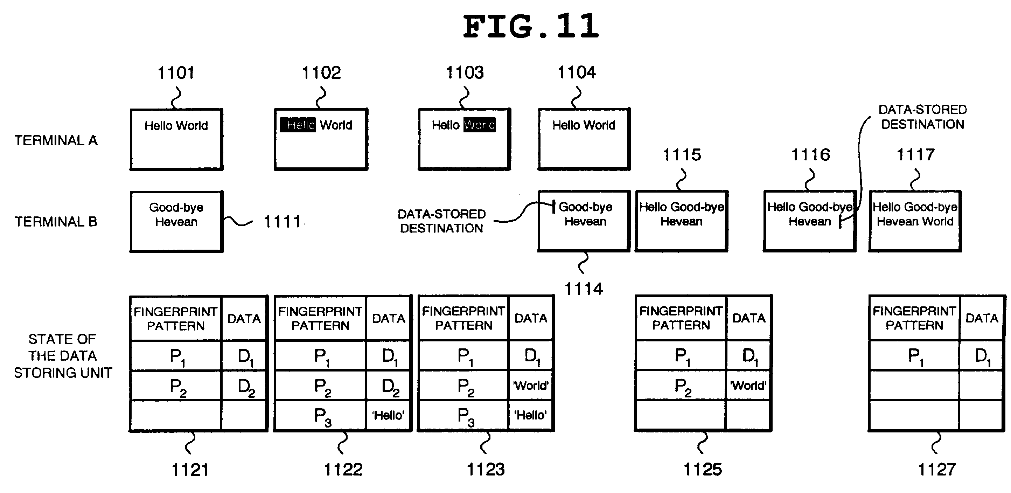

The data registering operation and data acquiring operation in the embodiment will be described with reference to the flow chart of Fig. 5. As illustrated in Fig. 5, a user specifies the data Dj to be transferred, or the location Lj into which the data should be transferred, in one of the terminals 101-1 to 101-n, with the input device 202 (Step 501). Here, suppose a case, for example, that the letter of "Hello World" is being displayed on the display 205 of the terminal, as illustrated by the reference numeral 1101 in Fig. 11, and a user selects the portion of "Hello" with the input device 202, as illustrated by the reference numeral 1102 in Fig. 11. At this point, the terminal can be a data sending terminal or a data receiving terminal. Therefore, in this case, the selected data "Hello" may be the data Dj to be transferred from a data sending terminal, or the selected portion "Hello" may be the location Lj into which the data is transferred on a data receiving terminal.

Next, a user gives his/her fingerprint of any finger with putting the finger on the fingerprint scanner 201. The fingerprint image Sj of the user is read by the fingerprint scanner 201 (Step 502).

The data registering/acquiring unit 206 converts the fingerprint image Sj into the fingerprint pattern Pj (Step 503).

Also, the data registering/acquiring unit 206 decides whether the terminal, in which the user operated, is a data sending party or a data receiving party (Step 504).

One of the judgement methods in Step 504 may be based on the state of the user selection. Namely, if the data selected by the user is not null, the terminal is regarded as a data sending terminal. Otherwise, it is regarded as a data receiving terminal. For example, as illustrated by the reference numeral 1102 in Fig. 11, when the length of the character string selected by the user is not "0" (the selected data is not null), the terminal is regarded as the data sending terminal and the data registration process is performed. On the contrary, as illustrated by the reference numeral 1114 in Fig. 11, when the length of the selected character string is "0", the terminal is regarded as the data receiving terminal and the data acquisition process is performed.

Another judging method is to provide the user with the function of selecting a data register mode and a data acquisition mode. This method allows the user to explicitly select whether the terminal is a data sending terminal or a data receiving terminal.

It is also possible to decide a data sending terminal and a data receiving terminal depending on the type of each terminal 101-1 to 101-n. For example, when some terminal of 101-1 to 101-n are a public terminals used only for providing public information, it is not permittedd to write personal data therein; then, such terminals are treated as the data sending terminals. In this case, judgement in Step 504 is unnecessary.

A terminal judged to be a data sending party in Step 504 performs the data registration process (Step 505), while a terminal judged to be a data receiving party performs the data acquisition process (Step 506).

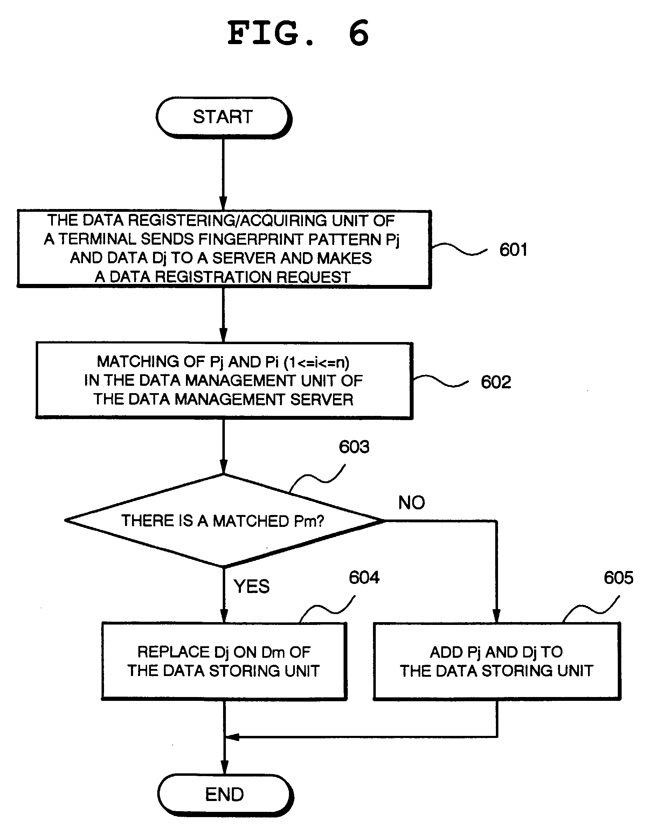

The content of the data registration process in Step 505 of Fig. 5 will be described with reference to the flow chart of Fig. 6.

The data registering/acquiring unit 206 of a data sending terminal sends the fingerprint pattern Pj and the data Dj to be transferred to the data management server 100, and makes a data registration request to the data management server 100 (Step 601).

Receiving Pj, Dj and the data registration request, the data management server 100 performs pattern matching between the fingerprint pattern Pj, sent from the data sending terminal and the fingerprint pattern Pi (1<=i<=n) that have been already stored in the data storing unit 304, in the data management unit 303 (Step 602).

If there exists the fingerprint pattern Pm matched with the fingerprint pattern Pj in the data storing unit 304 (Step 603), the data Dm corresponding to the fingerprint pattern Pm is replaced with the transfer data Dj specified by a user (Step 604). Otherwise, the fingerprint pattern Pj and the data Dj are additionally registered in the data storing unit 304 (Step 605).

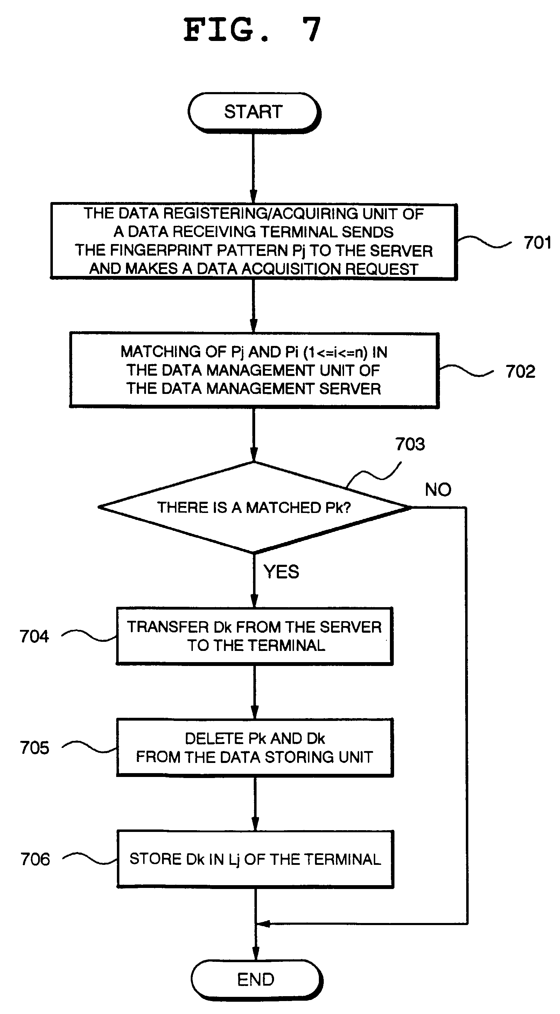

The content of the data acquisition process in Step 506 of Fig. 5 will be described with reference to the flow chart of Fig. 7.

The data registering/acquiring unit 206 of a data receiving terminal sends the fingerprint pattern Pj to the data management server 100, and makes a data acquisition request to the data management server 100 (Step 701).

Receiving Pj and the data acquiring request, the data management server 100 performs pattern matching between the fingerprint pattern Pj sent from the data receiving terminal and the fingerprint pattern Pi (1<=i<=n) that have been stored in the data storing unit 304, in the data management unit 303 (Step 702).

When there exists the fingerprint pattern Pk matched with the fingerprint pattern Pj in the data storing unit 304 (Step 703), the data Dk corresponding to the fingerprint pattern Pk is sent to the data receiving terminal (Step 704), and the fingerprint pattern Pk and the data Dk are deleted from the data storing unit 304 (Step 705).

Further, the obtained data Dk is stored in the location Lj of the data receiving terminal (Step 706). When there exists no fingerprint pattern matched with the fingerprint pattern Pj in the data storing unit 304 (Step 703), the processing will be completed.

As mentioned above, in the embodiment, transfer data is bound to the fingerprint pattern whose uniqueness is guaranteed and a set of the data and the fingerprint pattern is registered in the data management server 100. Therefore, if the user gives a fingerprint pattern to a data receiving terminal, his/her necessary information can be obtained from the data management server 100 by using the fingerprint pattern as a retrieval key. Accordingly, it is possible for a user to transfer data by use of his/her own finger without using any special tools. Further, a user can operate as if data were attached to his/her own finger, thereby improving operational performance extremely. Also, a user can transfer data without knowing a machine name of a data receiving terminal, thereby further improving operational performance.

Next, the second embodiment of the present invention will be described. As described above, in the present invention, the terminal operated by the user has to determine which type of request it should issue: a data registration request or a data acquisition request. In the first embodiment of the present invention, this is determined only by the terminal itself. In the second embodiment, however, this judgement is made by referring the data storing unit 304 in the data management server 100. The system constitution is the same as the first embodiment as shown in Figs. 1, 2, and 3.

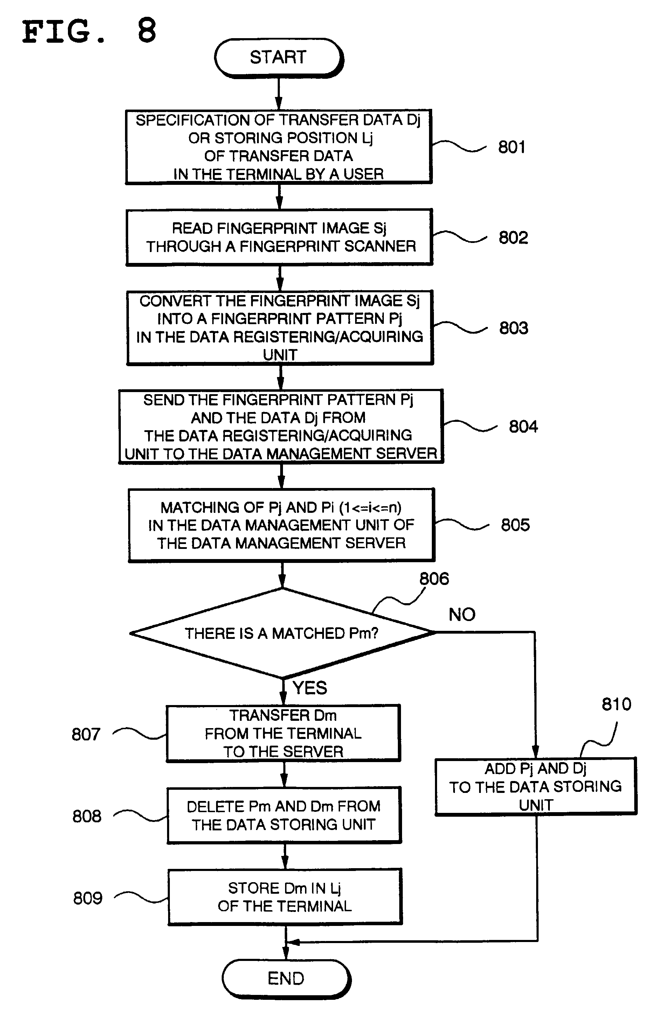

With reference to the flow chart of Fig. 8, the operation of the second embodiment will be described. In this embodiment, the processing in Steps 801 to 803 in Fig. 8 is identical to that in Steps 501 to 503 in Fig. 5; therefore, the description thereof is omitted.

The data registering/acquiring unit 206 of a terminal that the user operated sends the fingerprint pattern Pj and the transfer data Dj to the data management server 100 without specifying the type of the request (Step 804).

The data management unit 303 in the data management server 100 performs pattern matching between the fingerprint pattern Pj sent from a terminal and the fingerprint pattern Pi (1<=i<=n) stored in the data storing unit 304 (Step 805).

When there exists the fingerprint pattern Pm matched with the fingerprint pattern Pj in the data storing unit 304 (Step 806), the data acquisition process in Steps 807 to 809 will be executed. This processing is identical to the process in Steps 704 to 706 in Fig. 7;hence, the description thereof is omitted.

When there exists no fingerprint pattern matched with the fingerprint pattern Pj in the data storing unit 304 (Step 806), the data registration process is performed. Namely, a set of the Pj and Dj sent from the terminal is newly added to the data storing unit 304 (Step 810).

This time, the a third embodiment of the present invention will be described. In the third embodiment, an entity of transfer data is not stored in the data storing unit 304 of the data management server 100, but it is held in the data sending terminal. The data management server 100 is arranged to hold only an identifier capable of identifying the transfer data uniquely. This embodiment shows the example case that the machine ID of a data sending terminal and the data ID of transfer data within the data sending terminal are used as such an identifier.

In this case, the fingerprint pattern Pi, the machine ID "MIDi" and the data ID "DIDi" are sent to the data management server 100 from the data sending terminal, and they are registered in the data storing unit 304 of the data management server 100. the transfer data is held in the storage 203 of the data sending terminal as it is.

The data registering/acquiring unit 206 of a data receiving terminal receives the machine ID "MIDi" of the data sending terminal and the data ID "DIDi" of the transfer data from the data management server 100, and requests the data sending terminal identified by the machine ID "MIDi" to send the data corresponding to the data ID herein. The data registering/acquiring unit 206 of the data sending terminal with machine ID "MIDi" sends the entity of data ID "DIDi" to the data receiving terminal. The machine ID and the data ID are not restricted, but anything will do, in the embodiment, if only they can identify the terminal and the data uniquely.

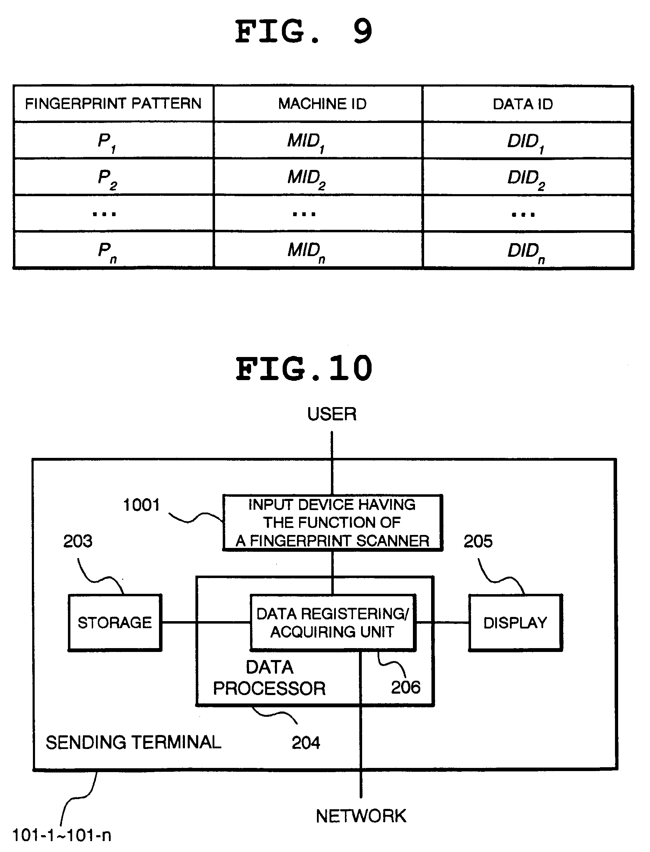

The fourth embodiment of the present invention will be described. The fourth embodiment is provided with an input device 1001 having the function of a fingerprint scanner, that is, an input device integral with a fingerprint scanner. The constitution in this case will be shown in Fig. 10.

According to the fourth embodiment, a user can both specify transfer data and the input of a fingerprint pattern simultaneously by one action, not separately. For example, by using a touch sensitive screen with the fingerprint scanning capability, the fingerprint pattern can be obtained at the same time when a user touches the screen to specify the transfer data. Also, by use of a mouse having a fingerprint scanner in its mouse button surface, the fingerprint pattern can be obtained at the same time when a user presses the mouse button to specify the transfer data.

It is also possible to combine this fourth embodiment with the above mentioned second embodiment and/or the third embodiment.

The fifth embodiment of the present invention will be described. In the fifth embodiment, when the user gives a fingerprint pattern on a data receiving terminal to transfer the data to the data receiving terminal, the data assigned to the fingerprint pattern is displayed before the data is actually stored into the data receiving terminal. This allows the user to confirm whether the data is his/her desired one to be transferred.

The constitution of the fifth embodiment is the same as the constitution of the first embodiment. A different point is that the confirmation step is added to the data acquisition process and it is performed by the data registering/acquiring unit 206 of the data receiving terminal.

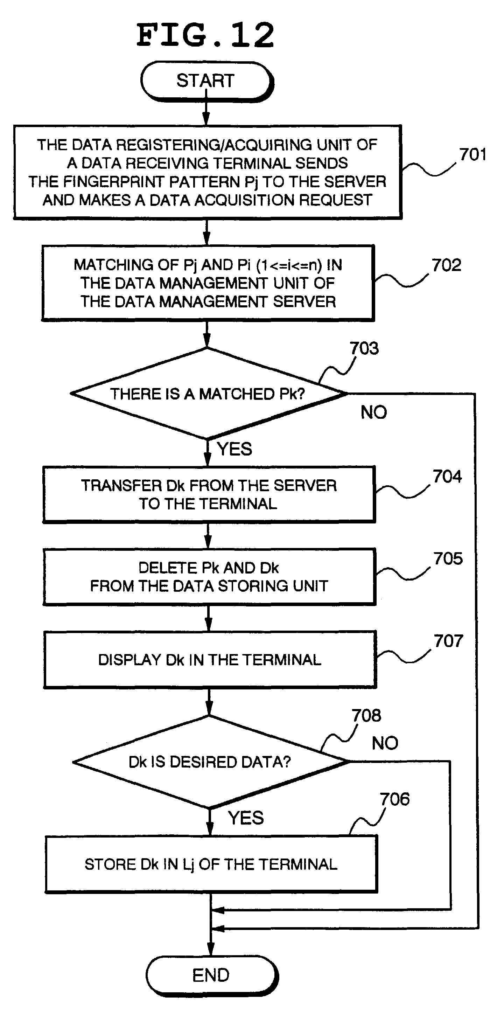

Assuming that the constitution of each terminal of the fifth embodiment is as shown in Fig. 2, the data acquisition process in this embodiment will be described with reference to the flow chart of Fig. 12.

In Fig. 12, the same reference numeral is attached to the step of the same content as in Fig. 7 used for the description of the first embodiment, and the description of these steps is omitted here.

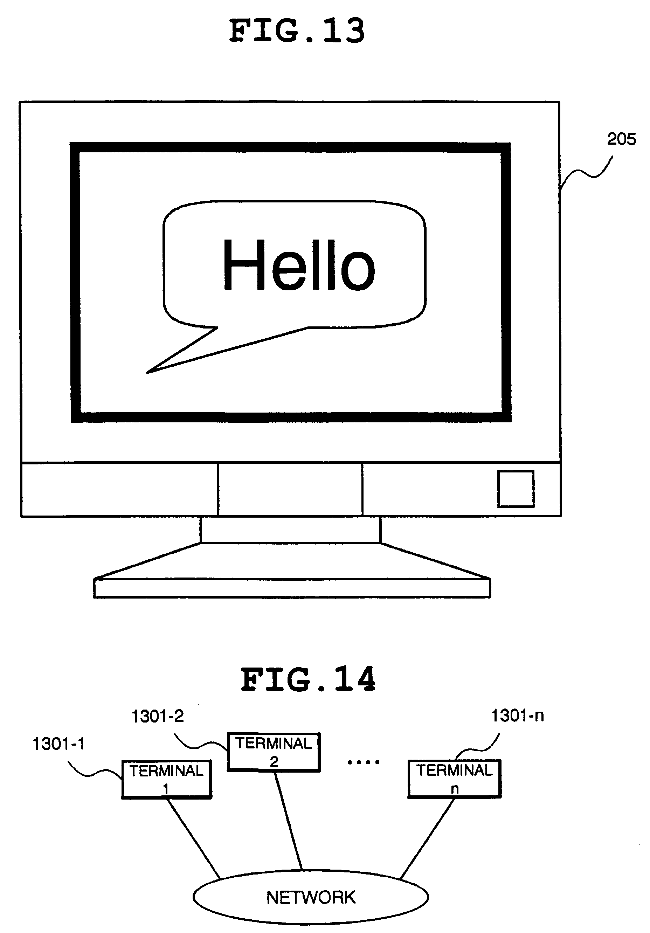

When the transfer data Dk is sent from data management server 100 to a data receiving terminal, Dk is displayed on the display 205 of the data receiving terminal. (Step 707). Fig 13 is an example of that the transfer data Dk is a string "Hello".

If the transfer data Dk displayed on the display 205 is the user-desired one, the user tells the system that he/she accept the displayed data, by using input device 202 (Step 708), and this step will proceed to Step 706. When the transfer data Dk is not the data required by a user, a series of processing will be completed.

The sixth embodiment of the present invention will be described. The constitution of the sixth embodiment is shown in Fig. 14. With reference to Fig. 14, the sixth embodiment is different from the constitution of Fig. 1 of the first embodiment in that the sixth embodiment uses no data management server 100 for managing fingerprint patterns and transfer data. Further, it is necessary to directly connect all terminals 1301-1 to 1301-n with each other through a network, as illustrated in Fig. 14.

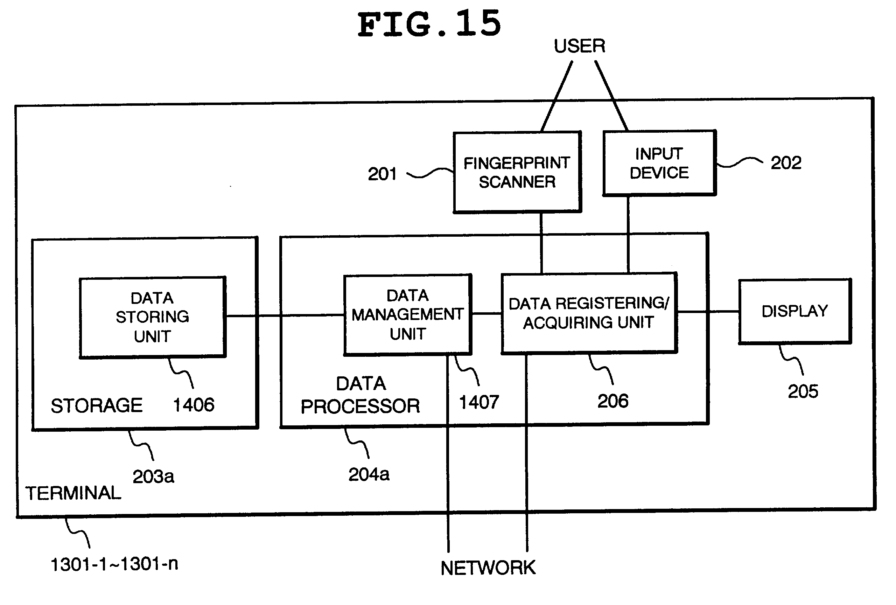

Fig. 15 shows the constitution of each terminal according to the sixth embodiment of the present invention. The differences between Fig 15 and Fig2 showing the constitution of a terminal in the first embodiment are that the storage 203a includes a data storing unit 1406 and that the data processor 204a includes a data management unit 1407 having the same function as that of the data management unit 303 of the data management server 100 of Fig. 3.

Also, in the sixth embodiment, the sets of fingerprint patterns and transfer data are stored in the data storing unit 1406. The data management unit 1407 requests the data storing unit 1406 to process the data registration and the data acquisition. Where, as for the data registration request, the data storing unit 1406 accepts a request only from the data registering/acquiring unit 206 within the same terminal. That is, the data storing unit 1406 stores only the data specified and the fingerprint pattern entered in the same terminal.

In the case of performing the data acquisition process, the data registering/acquiring unit 206 makes data acquisition requests to all terminals by turns, and the process will be completed when the transfer data can be obtained from some terminal.

The concrete example for the first embodiment of the present invention adopted there will be described this time with reference to Fig. 11. In this example, the judgement of whether a terminal is a sending party or a receiving party is made based on the state of data selection in the terminal.

Fig. 11 shows the examples of screen snapshots of the display 205 and the examples of the states of the data stored in the data storing unit 304.

Each reference numeral 1101, 1102, 1103, and 1104 of Fig. 11 shows the state of the display of a "terminal A", which would be a data sending terminal; each reference numeral 1111, 1114, 1115, 1116, and 1117 shows the state of the display of a "terminal B", which would be a data receiving terminal; and each reference numeral 1121, 1122, 1123, 1125, and 1127 shows the state of the data storing unit 304. Of these numerals, the reference numerals 1101, 1111, and 1121 of Fig. 11 show the initial states of the respective units.

As illustrated by the reference numeral 1102 of Fig. 11, assume that a user selects the character string "Hello" in a terminal A to specify the transfer data(Step 501 in Fig. 5), and enters the fingerprint pattern P3 by putting the index finger of his/her left hand on the fingerprint scanner (Steps 502 and 503 in Fig. 5).

Here, the length of the character string selected by the user is "5", that is, the selected data is not null; therefore, the data registering/acquiring unit 206 of the terminal A judges that the terminal A is a data sending terminal (Yes in Step 504 of Fig. 5), and performs the data registration processing (Step 505 in Fig. 5). In the data registration process, the unit 206 sends the data "Hello" selected by the user and the fingerprint pattern P3 to the data management server 100, thereafter making a data registration request (Step 601 in Fig. 6).

The data management unit 303 of the data management server 100 performs pattern matching between the received fingerprint pattern P3 and the fingerprint pattern registered in the data storing unit 304 (the state shown by the reference numeral 1121 of Fig. 11). In this case, since there is no match for the fingerprint pattern P3, the fingerprint pattern P3 and the transfer data "Hello" sent from the terminal A are registered in the data storing unit 304 (Step 605 in Fig. 6). As a result, the data storing unit 304 becomes the state shown by the reference numeral 1122 of Fig. 11.

Next, suppose that, in the terminal A operated as the above, a user selects the character string "World" as illustrated by the reference numeral 1103 of Fig. 11, and enter the fingerprint pattern P2' by putting the middle finger of his/her left hand on the fingerprint scanner. The fingerprint pattern P2' and the transfer data "World" are sent to the data management server 100, and the data registration process is performed. The fingerprint pattern P2' matches P2 which has been registered in the data storing unit 304; hence, the data D2 correspondint to the P2 is replaced with the transfer data "World" (Step 604 in Fig. 6). As a result, the data storing unit becomes the state shown by the reference numeral 1123 of Fig. 11.

This time, suppose that, in the terminal B, a user specifies the position where the transfer data should be placed (cursor is showing this position in reference numeral 1114 of Fig. 11) (Step 501 in Fig. 5), and enters the fingerprint pattern P3' by putting the index finger of his/her left hand on the fingerprint scanner (Steps 502 and 503 in Fig. 5).

Here, since the character string length selected by the user is "0" and it is null, the data registering/acquiring unit 206 of the terminal B judges that the terminal B is a data receiving terminal (Step 504 in Fig. 5) and performs the data acquisition process (Step 506 in Fig. 5). In the data acquisition process, the fingerprint pattern P3' entered by the user is sent to the data management server 100, and a data acquisition request is executed (Step 701 in Fig. 7).

The data management unit 303 of the data management server 100 performs pattern matching (Step 702 in Fig. 7) between the sent fingerprint pattern P3' and the fingerprint pattern registered in the data storing unit 304 (the state shown by the reference numeral 1123 of Fig. 11).

As a result, since the fingerprint pattern P3' matches P3, the transfer data "Hello" corresponding to the fingerprint pattern P3 is sent to the terminal B (Step 704 in Fig. 7), and the fingerprint pattern P3 and the transfer data "Hello" are deleted from the data storing unit 304 (Step 705 in Fig. 7). As a result, the data storing unit 304 becomes the state shown by the reference numeral 1125 of Fig. 11. In the terminal B of the data receiving party, the obtained data "Hello" is inserted into the position specified by the user (Step 706 in Fig. 7). As a result, the state of the display 205 of the terminal B becomes the state shown by the reference numeral 1115 of Fig. 11.

Similarly, in the terminal B, when the position where the transfer data should be inserted is specified as illustrated by the reference numeral 1116 of Fig. 11 and the fingerprint pattern P2' is entered by putting the middle finger of his/her left hand on the fingerprint scanner, the transfer data "World" is obtained from the data management server 100, the display state of the display 205 of the terminal B becomes the state shown by the reference numeral 1117 of Fig. 11, and the state of the data storing unit 304 becomes the state shown by the reference numeral 1127 of Fig. 11.

In the embodiment, although the description has been made in the case where the transfer data is a text, it is possible to transfer various kinds of data objects including not only text, but also static images, moving images, and voice sounds, etc.

According to the present invention, both the equipment of a data sending terminal and the equipment of a data receiving terminal gain access to the same data storing unit on a predetermined server and the data transfer is performed through the same data storing unit. Therefore, a user can transfer data without knowing a machine name of a data receiving terminal, differently from a FTP command.

According to the present invention, transfer data and a fingerprint pattern are correspondingly managed by the data storing unit in a lump. Namely, the equipment of the receiving terminal can retrieve the data to be transferred, by using a fingerprint pattern as the retrieval key. By a user's entering his/her fingerprint with the equipment of a sending terminal, transfer data can be bound with the fingerprint pattern. By use of the corresponding fingerprint pattern, the equipment of a receiving terminal can obtain necessary data, thereby performing the data transfer without any special tool such as an ID-recognizable pen.

Since a fingerprint has an inherent feature pattern, any particular work for verifying the uniqueness of the fingerprint is unnecessary. Further, a user can deal with ten pieces of data at maximum simultaneously, by assigning various data to each of his/her fingers.

Although the invention has been illustrated and described with respect to exemplary embodiment thereof, it should be understood by those skilled in the art that the foregoing and various other changes, omissions and additions may be made therein and thereto, without departing from the spirit and scope of the present invention. Therefore, the present invention should not be understood as limited to the specific embodiment set out above but to include all possible embodiments which can be embodies within a scope encompassed and equivalents thereof with respect to the feature set out in the appended claims.

## Claims

1. A data transfer system for transferring data between multiple terminals, comprising:
storing means for storing a set of data to be transferred from a data sending terminal and a fingerprint pattern of an operator given in the same terminal being bound with each other; and
obtaining means for obtaining data corresponding to the fingerprint pattern, which is entered in a data receiving terminal, from said storing means by using the fingerprint pattern as a retrieval key.

2. A data transfer system, having multiple terminals and a server connected through a network, for transferring desired data between the terminals, the system comprising:
storing means, in a server, for storing a set of data to be transferred and a fingerprint pattern of an operator, which are sent from a data sending terminal through the network; and
obtaining means, in a data receiving terminal, for obtaining data corresponding to the fingerprint pattern, which is entered in a data receiving terminal, from said storing means by using the fingerprint pattern as a retrieval key.

3. A data transfer system, in which transfer data is sent from a data sending terminal to a data management server through a network and the transfer data is held in a data management server and the transfer data is obtained by a data receiving terminal from the data management server through the network,
said data sending terminal and said data receiving terminal comprising;
fingerprint reading means for reading a fingerprint and outputting the fingerprint image, and
data registering/acquiring means for converting the fingerprint image into a fingerprint pattern suitable for fingerprint identification, and making a registration request for storing a set of the fingerprint pattern and the transfer data being bound with each other into the data management server, or making an acquisition request for acquiring the transfer data corresponding to the fingerprint pattern to said data management server,
said data management server comprising;
data storing means for storing the fingerprint pattern and the transfer data corresponding to this fingerprint pattern, and
data management means for, upon receipt of the registration request from said data registering/acquiring means of said terminal, registering a set of the fingerprint pattern and the transfer data into said data storing means, and upon receipt of the acquisition request from said data registering/acquiring means, retrieving the transfer data corresponding to the fingerprint pattern from said data storing means by using the fingerprint pattern as a retrieval key, so to transfer the same transfer data to said data receiving terminal.

4. A data transfer system as set forth in Claim 3, wherein
said terminal comprises input means for specifying data to be transferred or a position to which the data is transferred, and
said data registering/acquiring sends the transfer data specified by said input means correspondingly to the fingerprint pattern means and makes the data registration request to said data management server, and stores the transfer data sent from said data management server into the position specified by said input means.

5. A data transfer system as set forth in Claim 3, wherein
said fingerprint reading means of said terminal is integrated with input means for doing specification of transfer data or specification of a position to which the data is transferred, and
said data registering/acquiring means makes a data registration request to said data management server by sending the transfer data specified by said input means correspondingly to the fingerprint pattern, and stores the transfer data sent from said data management server into the position specified by said input means.

6. A data transfer system as set forth in Claim 3, wherein
said data management means of said data management server,
upon receipt of a set of the transfer data and the fingerprint pattern from said data registering/acquiring means of said terminal, overwrites the transfer data corresponding to the received fingerprint pattern, on the stored transfer data of said data storing means, when there is a match for the same fingerprint pattern in said data storing means, and additionally stores a set of the received fingerprint pattern and the received transfer data being bound with each other into said data storing means when there is no match.

7. A data transfer system as set forth in Claim 3, wherein
said data registering/acquiring means of said terminal
makes a data registration request for storing the transfer data into the data management server when the transfer data is not null, and makes a data acquisition request for acquiring the transfer data to said data management server when the transfer data is null.

8. A data transfer system as set forth in Claim 3, wherein
said data registering/acquiring means of said terminal
makes a data registration request for storing the transfer data into said data management server when the transfer data is not null, and makes a data acquisition request for acquiring the transfer data to said data management server when the transfer data is null, while
said data management means of said data management server,
upon receipt of a set of the transfer data and the fingerprint pattern from said data registering/acquiring means of said terminal, overwrites the transfer data corresponding to the received fingerprint pattern, on the stored transfer data of said data storing means, when there is a match for the same fingerprint pattern in said data storing means, and additionally stores a set of the received fingerprint pattern and the received transfer data being bound with each other into said data storing means when there is no match.

9. A data transfer system, in which transfer data sent from a data sending terminal through a network is held in a data management server and the transfer data is obtained by a data receiving terminal from the data management server through the network,
said terminal comprising;
fingerprint reading means for reading a fingerprint and outputting the fingerprint image, and
data registering/acquiring means for converting the fingerprint image into a fingerprint pattern suitable for fingerprint identification and outputting a set of the fingerprint pattern and the transfer data being bound with each other to said data management server, while,
said data management server comprising
data storing means for storing the fingerprint pattern and the transfer data corresponding to this fingerprint pattern, and
data management means for examining whether there is a match for the received fingerprint pattern in said data storing means, upon receipt of the transfer data and the fingerprint pattern from said data registering/acquiring means of said terminal, outputting the transfer data corresponding to the received fingerprint pattern when there is a match, and storing a set of the received fingerprint pattern and the transfer data being bound with each other into said data storing means.

10. A data transfer system as set forth in Claim 9, wherein
said terminal comprises input means for specifying data to be transferred or a position to which the data is transferred, and said data registering/acquiring means outputs the transfer data specified by said input means to said data management server correspondingly to the fingerprint pattern and stores the transfer data sent from said data management server into the position specified by said input means.

11. A data transfer system connecting multiple terminals and a data management server through a network, for transferring data between the terminals, wherein
said terminal comprising;
fingerprint reading means for reading a fingerprint and outputting the fingerprint image, and
data registering/acquiring means for converting the fingerprint image into a fingerprint pattern suitable for fingerprint identification, and making a registration request for storing the fingerprint pattern and an identifier capable of uniquely identifying the transfer data being bound with each other, into said data management server, or making an acquisition request for acquiring the identifier of the transfer data corresponding to the fingerprint pattern to said data management server,
said data management server comprising;
data storing means for storing the fingerprint pattern and the identifier of the transfer data corresponding to this fingerprint pattern, and
data management means for, upon receipt of the registration request from said data registering/acquiring means of said terminal, registering the fingerprint pattern and the identifier of the transfer data into said data storing means, and upon receipt of the acquisition request from said data registering/acquiring means, retrieving the identifier of the transfer data corresponding to the fingerprint pattern, which is entered in a data receiving terminal, from said data storing means by using the fingerprint pattern as a retrieval key, so to transfer the same transfer data to a data receiving terminal.

12. A data transfer system as set forth in Claim 11, wherein
said data registering/acquiring means of the data receiving terminal sends the identifier of the transfer data from said data management server to a data sending terminal and makes an data acquisition request of the transfer data,
said data registering/acquiring means of said terminal of the data sending party, upon receipt of the acquiring request from said terminal of a receiving party, sends the transfer data identified by the identifier to said terminal of a receiving party.

13. A data transfer system as set forth in Claim 11, wherein
said terminal comprises input means for position, and specifying data to be transferred or a position to which the data is transferred, and
said data registering/acquiring means sends the identifier of the transfer data specified by said input means correspondingly to the fingerprint pattern and makes a registration request to said data management server, and stores the transfer data sent from said terminal of the data sending party into the position specified by said input means.

14. A data transfer system connecting multiple terminals through a network, for transferring data between the terminals, wherein
said terminals comprising;
fingerprint reading means for reading a fingerprint and outputting the fingerprint image,
data storing means for storing a set of a fingerprint pattern and the transfer data being bound with each other,
data registering/acquiring means for converting the fingerprint image from said fingerprint reading means into the fingerprint pattern suitable for fingerprint identification, and storing a set of the fingerprint pattern and the transfer data being bound with each other into said data storing means, or making an acquisition request for acquiring the transfer data corresponding to the fingerprint pattern, which is entered in a data receiving terminal, by using the fingerprint pattern as a retrieval key, to the other terminal, and
data management means for, upon receipt of the acquiring request, performing pattern matching between the fingerprint pattern in the data acquisition request and a fingerprint pattern stored in said data storing means, and if there is a match, outputting the transfer data corresponding to the matched fingerprint pattern to the other terminal which sent the data acquisition request.

15. A data transfer system as set forth in Claim 14, wherein
said terminal comprises input means for specifying data to be transferred or a position to which the data is transferred, and
said data registering/acquiring means stores the transfer data specified by said input means into said data storing means correspondingly to the fingerprint pattern and stores the transfer data into the position specified by said input means.

16. A data transfer terminal for transferring data through a network, comprising:
fingerprint reading means for reading a fingerprint and outputting the fingerprint image; and data registering/acquiring means for converting the fingerprint image into a fingerprint pattern suitable for fingerprint identification, and making a registration request for storing a set of the fingerprint pattern and the transfer data being bound with each other, into said data management server connected with the network, or making an acquisition request for acquiring the transfer data corresponding to the fingerprint pattern to said data management server.

17. A data transfer terminal as set forth in Claim 16, further comprising input means for specifying data to be transferred or a position to which the data is transferred,
said data registering/acquiring means sending the transfer data specified by said input means correspondingly to the fingerprint pattern and making a data registration request to the data management server, and storing the transfer data sent from said data management server into the position specified by said input means.

18. A data transfer terminal as set forth in Claim 16, wherein
said fingerprint reading means of said terminal is integrated with input means for specifying data to be transferred or a position to which the data is transferred, and
said data registering/acquiring means sends the transfer data specified by said input means correspondingly to the fingerprint pattern and makes a registration request to the data management server, and stores the transfer data sent from said data management server into the position specified by said input means.

19. A data transfer terminal as set forth in Claim 16, further comprising
input means for specifying data to be transferred or a position to which the data is transferred,
said data registering/acquiring means
judging the specification of the transfer data by said input means to be a data registration request and judging the specification of the transfer data-storing position by said input means to be a data acquisition request.

20. A data transfer terminal as set forth in Claim 16, wherein
said data registering/acquiring means of the terminal
makes a registration request for storing the transfer data into the data management server when the transfer data is not null and makes a data acquisition request for acquiring the transfer data to said data management server when the transfer data is null.

21. A data transfer method for transferring data between multiple terminals, comprising the following steps of:
storing data to be transferred from data sending terminal and a fingerprint pattern of an operator in the same terminal being matched bound with each other into storing means; and
obtaining data corresponding to the fingerprint pattern, which is entered in a data receiving terminal, from said storing means by using the fingerprint pattern as a retrieval key, so to transfer the data to a data receiving terminal.

22. A data transfer method for transferring desired data between terminals connected through a network, comprising the following steps of:
storing a set of data to be transferred through the network and a fingerprint pattern of an operator being bound with each other into the server, by a data sending terminal; and
obtaining data corresponding to the fingerprint pattern, which is entered in a data receiving terminal, from the server by using the fingerprint pattern as a retrieval key, by a data receiving terminal.

23. A data transfer method for holding transfer data sent from a data sending terminal in a data management server connected through a network and obtaining the transfer data, by a data receiving terminal, from the data management server through the network, the method comprising the following steps of:
in said terminal,
converting the fingerprint image obtained by reading a fingerprint into a fingerprint pattern suitable for fingerprint identification, and making a registration request for storing a set of the fingerprint pattern and the transfer data being bound with each other, into the data management server, or making an acquisition request for acquiring the transfer data corresponding to the fingerprint pattern to said data management server;
in said data management server, registering the fingerprint pattern and the transfer data corresponding to this fingerprint pattern into data storing means, upon receipt of the registration request from the terminal; and
retrieving the transfer data corresponding to the fingerprint pattern, which is sent from the terminal, from said data storing means by using the fingerprint pattern as a retrieval key, so to transfer the same transfer data to a data receiving terminal when receiving the acquisition request.

24. A data transfer method for holding transfer data sent from a data sending terminal in a data management server connected through a network and obtaining the transfer data, by a data receiving terminal, from the data management server through the network, the method comprising the following steps of:
in said terminal,
converting the fingerprint image obtained by reading a fingerprint into a fingerprint pattern suitable for fingerprint identification and outputting a set of the fingerprint pattern and the transfer data being bound with each other to said data management server;
in said data management server,
examining whether there is a match for the received fingerprint pattern in said data storing means when receiving the fingerprint pattern and the transfer data corresponding to this fingerprint pattern from said terminal, outputting the transfer data corresponding to the received fingerprint pattern to the terminal when there is a match, and storing the received fingerprint pattern and the transfer data being bound with each other into said data storing means when there is no match.

25. A data transfer method connecting multiple terminals with a data management server through a network, for transferring data between the terminals, comprising the following steps of:
in said terminal,
converting the fingerprint image obtained by reading a fingerprint into a fingerprint pattern suitable for fingerprint identification, and making a registration request for storing a set of the fingerprint pattern and an identifier capable of uniquely identifying the transfer data being bound with each other, into the data management server, or making an acquisition request for acquiring the identifier of the transfer data corresponding to the fingerprint pattern to the data management server;
in said data management server,
storing the fingerprint pattern and the identifier of the transfer data corresponding to this fingerprint pattern; and
registering the fingerprint pattern and the identifier of the transfer data into said data storing means, when receiving the registration request of the fingerprint pattern and the identifier of the transfer data corresponding to this fingerprint pattern from the terminal, and retrieving the identifier of the transfer data corresponding to the fingerprint pattern from said data storing means by using the fingerprint pattern as a retrieval key, so to transfer the same transfer data to a data receiving terminal when receiving the data acquiring request.

26. A data transfer method for obtaining transfer data from a data sending terminal, by a data receiving terminal connected through a network, comprising the following steps of:
in said terminal,
converting the fingerprint image obtained by reading a fingerprint into a fingerprint pattern suitable for fingerprint identification, and storing a set of the fingerprint pattern and the transfer data being bound with each other into said data storing means, or making an data acquisition request for acquiring the transfer data corresponding to the fingerprint pattern by using the fingerprint pattern as a retrieval key, to the other terminal; and
upon receipt of the acquiring request, performing pattern matching between the fingerprint pattern in the data acquiring request and a fingerprint pattern stored in said data storing means, and if there is a match, outputting the transfer data corresponding to the fingerprint pattern to the other terminal which sent the data acquisition request.

27. A computer program capable of running on a computer so that the system comprising the computer program plus the computer carries out a method according to any one of claims 21 to 26.
